# FASCICULE DE BREVET EUROPEEN

(11) **EP 1 901 908 B1**
(45) Date de publication et mention de la délivrance du brevet: **17.03.2010**
(21) Numéro de dépôt: 06778769.7
(22) Date de dépôt: 04.07.2006
(51) Int. Cl.: B29C 49/56, B29C 49/36

(54) **UNITES DE MOULAGE PAR SOUFFLAGE ET MACHINE DE MOULAGE PAR SOUFFLAGE A PAS VARIABLE**
FORMEINHEITEN UND FORMMASCHINE MIT VERÄNDERLICHEM ABSTAND
MOLDING UNITS AND VARIABLE-PITCH MOLDING MACHINE

(30) Priorité: 11.07.2005 FR 0507388
(43) Date de publication de la demande: 26.03.2008
(73) Titulaire: Sidel Participations, 76930 Octeville Sur Mer (FR)
(72) Inventeur: GALLONI, Bruno, c/o SIDEL PARTICIPATIONS, F-76930 Octeville-sur-Mer (FR)
(74) Mandataire: Cabinet Plasseraud
(86) Numéro de dépôt international: PCT/FR2006/001588
(87) Numéro de publication internationale: WO 2007/006908

(56) Documents cités:
- FR-A- 2 793 722
- FR-A- 2 825 659

## Description

La présente invention se rapporte au domaine technique des machines de moulage, de soufflage ou d'étirage soufflage.

Dans une machine de soufflage, l'ébauche de récipient est une préforme préalablement injectée.

Il est connu de fabriquer des récipients, notamment des bouteilles, en matières thermoplastiques telles que par exemple polyéthylène téréphtalate (PET) par étirage soufflage de préformes disposées à l'intérieur d'un moule dont la cavité de moulage a la forme du récipient à obtenir.

Pour ce faire, des préformes ayant la forme d'un tube cylindrique fermé à une extrémité et dont l'autre extrémité, ouverte, constitue le goulot de la bouteille à obtenir, sont portées, dans un poste de conditionnement thermique, à une température telle qu'elles puissent être déformées.

Puis, les préformes chaudes sont transférées dans un moule constitué de deux demi moules assemblés où elles sont étirées et soufflées, le soufflage étant réalisé au moyen d'un fluide gazeux sous pression, en général de l'air.

Les pressions mises en jeu lors du soufflage atteignent fréquemment 40 bars. Il en résulte que lors de la fabrication d'une bouteille d'une contenance de 1,5 litre qui a une surface projetée de 250 cm2 environ, une force de l'ordre de 9.800 décanewtons tend à séparer les deux demi moules assemblés qui constituent le moule de soufflage.

Le document FR 2793722, qui représente le préembule de la revendication 1, de la demanderesse divulgue un exemple de machine de soufflage de type à carrousel comportant un mécanisme de fermeture et de verrouillage combinés d'une unité de moulage dite « en portefeuille ».

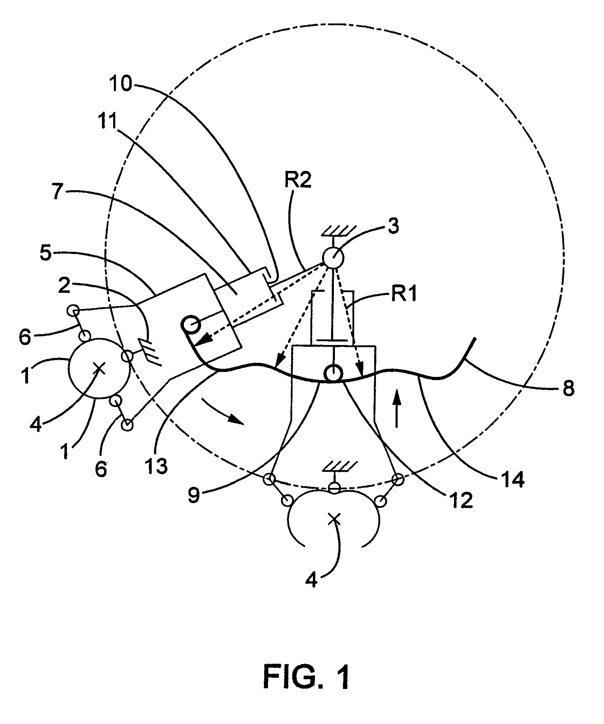

La figure 1 annexée illustre schématiquement cette technique antérieure.

Deux supports de moule 1 sont articulés à un châssis 2, solidaire d'un rotor entraîné en rotation autour d'un axe 3.

Le rotor comporte plusieurs unités de moulage identiques réparties angulairement autour de l'axe 3 de rotation.

En position ouverte, le moule est ouvert radialement vers l'extérieur et l'ébauche de récipient peut être engagée entre les deux demi moules soit selon l'axe 4 du moule, soit selon une direction orientée sensiblement radialement de l'extérieur vers l'intérieur.

L'ouverture de l'unité de moulage est obtenue en tirant les supports 1 radialement vers l'intérieur du carrousel.

Pour ce faire, l'unité de moulage comporte un coulisseau 5 qui coulisse sur le châssis 2 selon une direction radiale entre une position reculée d'ouverture et une position avancée de fermeture.

Chaque unité de moulage est pourvue de deux biellettes 6. Chaque biellette 6 relie en articulation un support 1 au coulisseau 5.

En position fermée des moules, l'orientation des biellettes 6 est sensiblement perpendiculaire au plan de joint des deux demi moules.

En position fermée des moules, l'orientation des biellettes 6 est sensiblement perpendiculaire à la direction radiale de coulissement du coulisseau 5.

Le coulisseau 5 est déplacé entre ses positions avancée et reculée par un dispositif qui combine d'une part un actionneur 7 tel qu'un vérin à double effet et d'autre part un dispositif à came 8 et à suiveur de came 9.

L'actionneur 7 est orienté radialement par rapport au rotor de la machine. Le piston 10 de l'actionneur 7 se trouve toujours à la même distance de l'axe de rotation du rotor tandis que le corps 11 de l'actionneur 7 est susceptible de suivre les mouvements radiaux du coulisseau 5.

Le coulisseau 5 porte le galet 9 monté à rotation autour d'un axe vertical et qui coopère avec la came 8 fixe disposée sur une partie de la périphérie du rotor.

La came 8 est agencée radialement à l'extérieur par rapport au galet 9. Elle comporte ainsi un tronçon central 12 circulaire dont l'axe est confondu avec celui de l'axe 3 du rotor et qui présente un rayon Rl.

Sur chaque côté du rotor, il est prévu un tronçon d'engagement 13 et un tronçon de dégagement 14.

Le tronçon d'engagement 13 est situé avant le tronçon central 12 sur la trajectoire du rotor, donc celle du galet 9.

Le tronçon d'engagement 13 permet d'amener radialement le galet 9 vers l'intérieur depuis un rayon R2, qui est supérieur au rayon Rl et qui correspond à la position avancée de fermeture du coulisseau 5, jusqu'au rayon Rl qui correspond à la position d'ouverture du coulisseau 5.

Dans les paragraphes suivants de la description de l'état de la technique, l'actionneur 7 précité sera un vérin double effet.

La came 8 ne s'étend au total que sur un secteur d'environ 90°autour de l'axe 3 de rotation du rotor.

Lorsque l'unité de moulage considérée n'est pas en regard de la came 8, le vérin 7 est alimenté en fluide de telle sorte que le coulisseau 5 soit poussé vers l'extérieur du carrousel, provoquant le serrage des deux demi moules l'un contre l'autre.

Juste avant que l'unité de soufflage n'arrive en regard de la came 8, on alimente les deux chambres du vérin 7 sous la même pression de fluide.

Ainsi, lorsque le galet 9 arrive au contact du tronçon d'engagement 13 de la came 8, l'effort exercé par le vérin 7 est suffisamment faible pour permettre à la came 8 de repousser vers l'intérieur du carrousel le coulisseau 5 sans que cela ne provoque d'à-coup notable.

La compression de l'air contenu dans la chambre externe du vérin 7 doit être telle que le vérin continue d'exercer un certain effort sur le coulisseau 5, pour plaquer le galet 9 sur la came 8 sans qu'il ne rebondisse.

Lorsque le galet 9 atteint le tronçon central 12 de la came 8, le coulisseau 5 a atteint sa position la plus reculée et l'unité de moulage est complètement ouverte.

Lorsque le galet 9 aborde le tronçon de dégagement 14 de la came 8, l'effort exercé par le vérin 6 doit être maintenu suffisant pour que le coulisseau 5 soit ramené radialement vers l'extérieur et que le mouvement de fermeture de l'unité de moulage qui en résulte se fasse sans effort excessif, de manière fluide.

Lorsque le galet 9 a dépassé la fin du tronçon de dégagement 14, l'unité de moulage se trouve alors en position de fermeture et il est alors possible de n'alimenter que la chambre externe du vérin 7 pour éviter tout recul de ce vérin 7.

La machine décrite dans le document FR 2793722 donne toute satisfaction mais présente toutefois quelques inconvénients.

En premier lieu, les mouvements du coulisseau 5 qui conditionnent la force de serrage des moules, ainsi que leur ouverture/fermeture dépend notamment de la pression de travail dans le vérin 7. Il est délicat de contrôler les pressions dans chaque vérin 7 au cours de la rotation des unités de moulage.

En deuxième lieu, la configuration de la machine présentée dans le document FR 2793 722, n'est pas compacte.

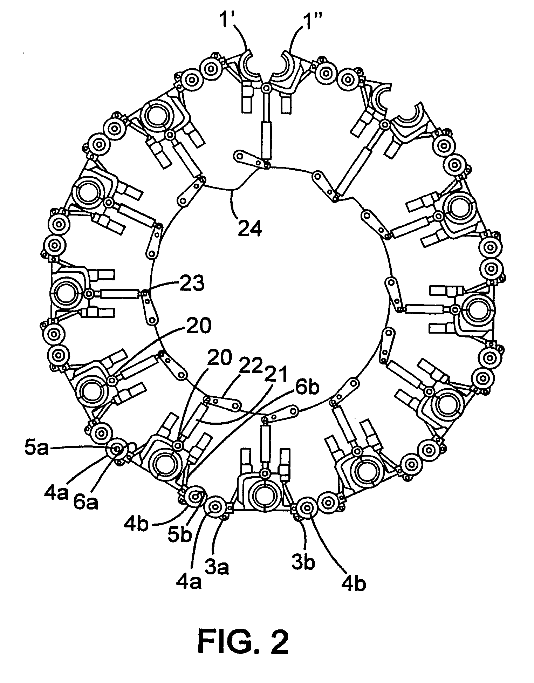

Le document FR 2 825 659 décrit un carrousel de machine de moulage par injection ou par soufflage tel que représenté en figure 2.

Chaque demi moule 1', 1" est articulé par l'intermédiaire d'une bielle de liaison 3a, 3b sur une pièce 4a, 4b qui est montée pivotante autour d'un axe 5a, 5b.

Les pièces pivotantes 4a, 4b sont mues en rotation chacune par une bielle d'actionnement 6a, 6b articulée par ses extrémités respectivement à ladite pièce 4a, 4b et à un chariot translatif.

Une translation du chariot entraîne au moyen des bielles 6a, 6b, le pivotement des pièces 4a, 4b et ainsi la fermeture ou l'ouverture des moules par l'action des bielles de liaison 3a, 3b sur les demi moules 1', 1", les axes de pivotement 20, 5a et 5b étant fixes par rapport au mouvement du chariot 7.

Pour actionner le chariot, une tige 21 de poussée et de traction articulée, d'une part audit chariot et d'autre part, à une bielle 22 qui est montée pivotante autour d'un axe 23 et qui est munie d'un galet d'axe 23. Le galet est destiné à coopérer avec une came 24, pour assurer l'ouverture et la fermeture des moules.

La structure décrite dans le document FR 2825659 n'est pas compacte.

La demanderesse s'est attachée à résoudre les problèmes mentionnés auparavant.

A ces fins, l'invention se rapporte, selon un premier aspect, à un ensemble comprenant des unités de moulage de matières polymères.

Par unité de moulage, on désigne aussi bien des unités pour le moulage par injection, que des unités de soufflage ou d'étirage soufflage.

Ces unités sont disposées les unes à la suite des autres en une file mobile, par exemple en circuit sans fin, et notamment dans une machine à carrousel.

Chacune desdites unités de moulage comprend au moins un moule, ce moule comprenant deux pièces mobiles l'une par rapport à l'autre autour d'un axe d'articulation.

Le déplacement de ces deux pièces de moule l'une par rapport à l'autre intervient lors de l'ouverture et de la fermeture du moule.

L'ensemble comprend des galets coopérant avec une came, chacun desdits galets étant relié par des bielles aux deux axes d'articulation d'unités de moulage contiguës.

La trajectoire décrite par les galets contre la came et la trajectoire décrite par les axes d'articulation sont amenées à se rapprocher l'une de l'autre sur une course prédéterminée des unités de moulage, de sorte à ce que la distance entre les axes d'articulation des unités de moulage contiguës est augmentée sur cette course.

L'on obtient ainsi un ensemble comprenant des unités de moulage à pas variable.

Selon diverses réalisations l'ensemble présente les caractères suivants, le cas échéant combinés.

Les galets suivent une trajectoire ayant un rayon de courbure sensiblement fixe, et ce sont les axes d'articulation des moules qui suivent une trajectoire se rapprochant de celle des galets.

Les axes d'articulation suivent une trajectoire ayant un rayon de courbure sensiblement fixe, et ce sont les galets qui suivent une trajectoire se rapprochant de celles des axes d'articulation.

Les deux pièces mobiles des unités de moulage sont des porte-moules, ou forment chacune un demi moule, les deux demi moules étant articulés l'un à l'autre autour dudit axe d'articulation.

Chaque porte moule ou chaque demi moule d'une unité de moulage est relié par une bielle ou une articulation à un porte moule ou un demi moule d'une unité de moulage contiguë.

L'invention se rapporte, selon un deuxième aspect, à une machine de moulage, de soufflage, ou de tirage soufflage de récipients en thermoplastiques, notamment PET, PEN, cette machine comprenant au moins un ensemble tel que présenté auparavant.

Dans une réalisation particulière, les unités de moulage sont des unités de soufflage montées mobiles en rotation autour d'un axe de carrousel sensiblement vertical, chacune desdites unités de soufflage comprenant deux support de moules sensiblement identiques, ces supports étant montés articulés l'un à l'autre autour d'un axe d'articulation sensiblement vertical, les galets coopérant avec une piste, chacun desdits galets étant relié par des bielles aux deux axes d'articulation d'unités de moulage contiguës, la trajectoire décrite par les galets contre la piste et la trajectoire décrite par les axes d'articulation étant amenées à se rapprocher l'une de l'autre sur une course prédéterminée des unités de moulage, de sorte à ce que la distance entre les axes d'articulation des unités de moulage contiguës est augmentée sur cette course.

Dans une mise en oeuvre, les galets suivent une trajectoire sensiblement circulaire de rayon R1 par rapport à l'axe du carrousel, les axes d'articulation suivant une trajectoire sensiblement circulaire de rayon R3 par rapport à l'axe du carrousel.

Les galets ou les axes d'articulation suivent, pour une valeur de course angulaire prédéterminée du carrousel, une trajectoire de rayon de courbure R2 compris entre R1 et R3, ce rayon de courbure étant notamment fixe.

Dans une mise en oeuvre particulière, les rayons de courbures R1 et R2 sont définis par un chemin de cames pourvu d'un plan de symétrie sensiblement vertical.

D'autres objets et avantages de l'invention apparaîtront au cours de la description suivante de modes de réalisations, description qui va être effectuée en se référant aux dessins annexés dans lesquels :
- les figures 1 et 2 sont des vues de machines proposées dans l'art antérieur ;
- la figure 3 est un schéma de principe d'une machine selon l'invention, pourvue de moyens d'espacement des moules et d'ouverture/fermeture asymétrique des moules ;
- la figure 4 est une vue de détail d'une variante de mise en oeuvre.

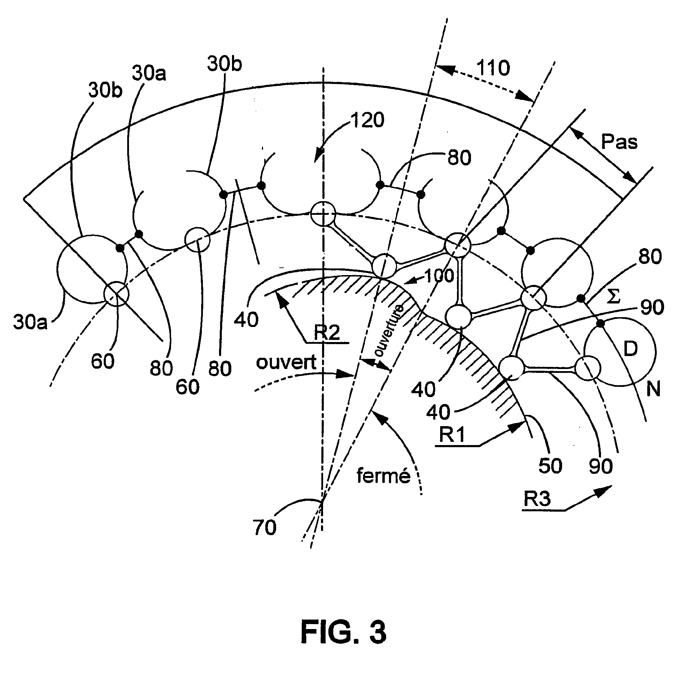

Les supports de moule 30a, 30b sont schématisés en figure 3. Ces supports de moule sont destinés chacun à porter un demi moule (non représenté).

Dans le mode de réalisation de la figure 3, les supports de moule présentent sensiblement la forme d'un demi tube de manière à recevoir des moules semi cylindriques.

Pour chaque unité de moule, les deux supports 30a, 30b sont articulés entre une position fermée, et des positions d'ouverture.

En position fermée, les supports 30a, 30b définissent un espace interne sensiblement cylindrique de telle sorte que les demi moules qu'ils portent sont en appui l'un contre l'autre par leurs faces de plan de joint respectives.

Chaque unité de moulage (ou de soufflage, d'étirage soufflage) est reliée à un galet 40 ou patin de guidage.

Le galet 40 coopère avec un chemin de cames 50, ou un rail de guidage courbe.

Pour chaque unité de moulage, les supports 30a,30b ou porte moules sont articulés entre eux, autour d'un axe 60.

Lors de la rotation de unités de moulage autour de l'axe 70 du carrousel, les axes 60 d'articulation des porte moules 30a, 30b ont une course sensiblement circulaire de rayon R3 autour de l'axe central 70 du carrousel.

Chaque support 30a, 30b d'une première unité donnée de moulage est relié par une bielle articulée 80 au support le plus proche d'une deuxième unité de moulage contiguë.

Dans une mise en oeuvre, les bielles 80 sont remplacées par des axes d'articulation reliant les supports immédiatement voisins des unités de moulage contiguës.

Chaque axe d'articulation 60 des supports 30a, 30b est relié à deux galets 40 ou patins de guidage, par des bielles 90.

Lorsque les galets 40 ou patins de guidage circulent contre une première partie en arc de cercle de rayon R1 du chemin de cames 50, les unités de moulage sont fermées et équidistantes d'un pas prédéterminé.

Lorsque les galets 40 rencontrent le tronçon d'engagement 100, la position radiale de l'axe d'articulation 60 sur le rayon R1 étant fixe, et les bielles 90 étant rigides, les unités de moulage vont s'écarter les unes des autres.

L'on obtient ainsi une variation du pas entre unités de moulage.

Les axes d'articulation 60 des supports 30a, 30b suivant une course circulaire de rayon R1 et les supports 30a, 30b contigus étant reliés par des bielles rigides 80, l'écartement des unités de moulage est obtenu simultanément à un écartement des supports 30a, 30b permettant l'ouverture des moules.

Ainsi qu'il apparaît en figure 3, l'ouverture des moules est asymétrique. En effet, tandis que l'un des supports d'un moule entrant dans la zone d'ouverture 110 est encore retenu par une première bielle 80 à un moule non ouvert, l'autre support est relié par une deuxième bielle 80 à un moule ouvert 120.

Cette ouverture asymétrique est avantageuse.

Dans les dispositifs carrousel de soufflage actuellement utilisés, les deux demi moules s'ouvrent sensiblement symétriquement de part et d'autre du plan de joint, ces plans de joints étant sensiblement radiaux.

Dans ces dispositifs connus, les moyens d'introduction d'ébauches et les moyens d'extraction de bouteilles sont agencés sous forme de roues de transfert rotatives munies de pinces de préhension supportées par des bras approximativement radiaux. Chaque pince doit accompagner le moule sur une portion de sa trajectoire rotative, avec en complément :
- un mouvement à composante radiale pour pénétrer dans le moule,
- un mouvement à composante radiale pour sortir du moule ;
ces déplacements de pinces devant être effectués sans interférence physique avec les bords des demi moules, de l'ébauche et du récipient.

Il en résulte un agencement relativement complexe des moyens d'introduction et des moyens d'extraction.

Par la mise en oeuvre d'une structure telle que présentée en figure 3, il est possible d'obtenir une ouverture asymétrique des moules. Pour une machine de soufflage, il est ainsi possible de réduire les temps d'introduction d'ébauche et de libération des bouteilles.

La structure présentée en figure 3 permet en outre l'emploi de moyens de préhension de structure simplifiée, telle que présentée par exemple dans le document FR 288 1678 de la demanderesse.

Ce document FR 288 1678 a été déposée le 8 février 2005. Dès lors, ce document est non publiée au jour du dépôt de la présente demande de brevet français. La réalisation de moules à ouverture asymétrique a été décrite dans le document FR 288 1678 du 8 février également.

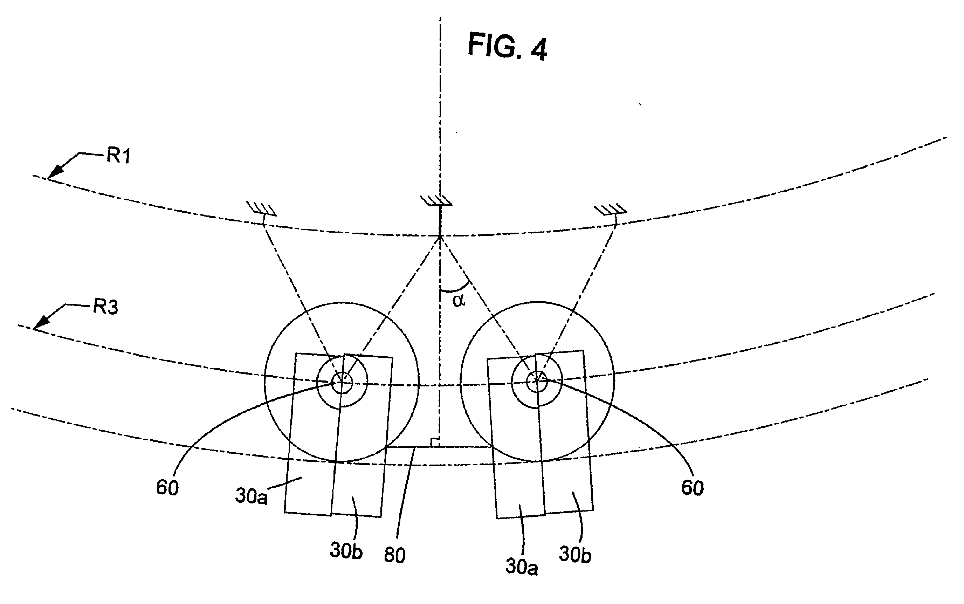

Dans la variante de réalisation de la figure 4, les unités porte moules ou supports 30a, 30b sont toujours reliées entre elles par des bielles 80.

Les axes d'articulation 60 ne suivent plus une course circulaire fixe, mais un chemin de cames analogue à celui référencé 40 en figure 3. Les galets 40 suivent alors un trajet circulaire de rayon R1 fixe.

L'invention offre de nombreux avantages.

Certains de ces avantages sont indiqués ci-dessous, leur ordre d'énumération n'illustrant pas nécessairement leur importance relative, qui peut varier en fonction des applications visées pour la machine.

En premier lieu, la compacité de la machine est augmentée. Les unités de moulage ne sont écartées les unes des autres que dans les zones où cet écartement est utile, c'est-à-dire les zones d'ouverture et de fermeture des moules.

Deuxièmement, l'ouverture des moules étant asymétrique, l'écartement des moules dans les zones d'ouverture et de fermeture est moins important que dans les machines conventionnelles à angle d'ouverture aigu ou à ouverture symétrique des moules.

Troisièmement, l'ouverture des moules étant asymétrique, il est possible d'employer des moyens de préhension d'ébauche et de bouteilles ayant une structure plus simple, et des vitesses de travail plus importantes.

Quatrièmement, les moules peuvent être démontés indépendamment les uns des autres, pour maintenance.

Cinquièmement, les moyens de verrouillage conventionnels des moules peuvent être évités, notamment lorsque la pression interne aux moules n'est pas très élevée. Cette phase de verrouillage correspondant à une course angulaire du carrousel, il en résulte une plus grande productivité.

## Revendications

1. Ensemble comprenant des unités de moulage de matières polymères, ces unités étant disposées les unes à la suite des autres en une file mobile, chacune desdites unités de moulage comprenant un moule, ce moule comprenant deux pièces mobiles l'une par rapport à l'autre autour d'un axe d'articulation (60), le déplacement de ces deux pièces (30a, 30b) l'une par rapport à l'autre intervenant lors de l'ouverture et de la fermeture du moule, **caractérisé en ce que** l'ensemble comprend des galets (40) coopérant avec une came (50), chacun desdits galets (40) étant relié par des bielles (90) aux deux axes d'articulation (60) d'unités de moulage contiguës, la trajectoire décrite par les galets (40) contre la came (50) et la trajectoire décrite par les axes d'articulation (60) étant amenées à se rapprocher l'une de l'autre sur une course prédéterminée des unités de moulage, de sorte à ce que la distance entre les axes d'articulation (60) des unités de moulage contiguës est augmentée sur cette course.

2. Ensemble selon la revendication 1, **caractérisé en ce que** les galets (40) suivent une trajectoire ayant un rayon de courbure sensiblement fixe.

3. Ensemble selon la revendication 1, **caractérisé en ce que** les axes d'articulation (60) suivent une trajectoire ayant un rayon de courbure sensiblement fixe.

4. Ensemble selon l'une quelconque des revendications 1 à 3, **caractérisé en ce que** les unités de moulage font partie d'un carrousel.

5. Ensemble selon l'une quelconque des revendications 1 à 4, **caractérisé en ce que** les deux pièces mobiles des unités de moulage sont des porte moule.

6. Ensemble selon l'une quelconque des revendications 1 à 5, **caractérisé en ce que** les deux pièces mobiles des unités de moulage comportent chacune un demi moule, les deux demi moules étant articulés l'un à l'autre autour dudit axe d'articulation (60).

7. Ensemble selon la revendication 5 ou 6, **caractérisé en ce que** chaque porte moule ou chaque demi moule d'une unité de moulage est relié par une bielle ou une articulation à un porte moule ou un demi moule d'une unité de moulage contiguë.

8. Machine de moulage, de soufflage, ou de tirage soufflage de récipients en thermoplastiques, notamment PET, cette machine comprenant au moins un ensemble tel que présenté dans l'une quelconque des revendications 1 à 7.

9. Machine selon la revendication 8, **caractérisée en ce que** les unités de moulage sont des unités de soufflage montées mobiles en rotation autour d'un axe (70) de carrousel sensiblement vertical, chacune desdites unités de soufflage comprenant deux supports de moules (30a, 30b) sensiblement identiques, ces supports étant montés articulés l'un à l'autre autour d'un axe d'articulation (60) sensiblement vertical, les galets (40) coopérant avec une piste (50), chacun desdits galets (40) étant relié par des bielles (90) aux deux axes d'articulation (60) d'unités de moulage contiguës, la trajectoire décrite par les galets (40) contre la piste (50) et la trajectoire décrite par les axes d'articulation (60) étant amenées à se rapprocher l'une de l'autre sur une course prédéterminée des unités de moulage, de sorte à ce que la distance entre les axes d'articulation (60) des unités de moulage contiguës est augmentée sur cette course.

10. Machine selon la revendication 9, **caractérisée en ce que** les galets (40) suivent une trajectoire sensiblement circulaire de rayon R1 par rapport à l'axe (70) du carrousel.

11. Machine selon la revendication 9, **caractérisée en ce que** les axes d'articulation (60) suivent une trajectoire sensiblement circulaire de rayon R3 par rapport à l'axe (70) du carrousel.

12. Machine selon la revendication 11, **caractérisée en ce que** les galets (40) ou les axes d'articulation (60) suivent, pour une valeur de course angulaire prédéterminée du carrousel, une trajectoire de rayon de courbure R2 compris entre R1 et R3.

13. Machine selon la revendication 12, **caractérisée en ce que** les rayons de courbures R1 et R2 sont définis par un chemin de cames (50) pourvu d'un plan de symétrie sensiblement vertical.

## Claims

1. Assembly comprising moulding units for polymers, these units being arranged one after the other in a mobile line, each of said moulding units comprising a mould, this mould comprising two parts mobile with respect to each other about an articulation shaft (60), the movement of these two parts (30a, 30b) with respect to each other taking place during the opening and closing of the mould, **characterized in that** the assembly comprises rollers (40) cooperating with a cam (50), each of said rollers (40) being connected by links (90) to the two articulation shafts (60) of contiguous moulding units, the trajectory described by the rollers (40) against the cam (50) and the trajectory described by the articulation shafts (60) being brought closer to each other on a predetermined course of the moulding units, so that the distance between the articulation shafts (60) of the contiguous moulding units is increased over this course.

2. Assembly according to claim 1, **characterized in that** the rollers (40) follow a trajectory having a substantially fixed radius of curvature.

3. Assembly according to claim 1, **characterized in that** the articulation shafts (60) follow a trajectory having an approximately fixed radius of curvature.

4. Assembly according to any one of claims 1 to 3, **characterized in that** the moulding units form part of a carousel.

5. Assembly according to any one of claims 1 to 4, **characterized in that** the two mobile parts of the moulding units are mould carriers.

6. Assembly according to any one of claims 1 to 5, **characterized in that** the two mobile parts of the moulding units each comprise a half mould, the two half-moulds being articulated to each other about said articulation shaft (60).

7. Assembly according to claim 5 or 6, **characterized in that** each mould carrier or each half mould of a moulding unit is connected by a link or an articulated joint to a mould carrier or a half mould of a contiguous moulding unit.

8. Moulding, blow-moulding or stretch-blow moulding machine for containers made of thermoplastics, in particular PET, this machine comprising at least one assembly such as claimed in any one of claims 1 to 7.

9. Machine according to claim 8, **characterized in that** the moulding units are blow-moulding units mounted mobile in rotation about a shaft (70) of a substantially vertical carousel, each of said blow-moulding units comprising two substantially identical mould supports (30a, 30b), these supports being mounted articulated to each other about a substantially vertical articulation shaft (60), the rollers (40) cooperating with a track (50), each of said rollers (40) being connected by links (90) to the two articulation shafts (60) of contiguous moulding units, the trajectory described by the rollers (40) against the track (50) and the trajectory described by the articulation shafts (60) being brought closer to each other over a predetermined course of the moulding units, so that the distance between the articulation shafts (60) of the contiguous moulding units is increased over this course.

10. Machine according to claim 9, **characterized in that** the rollers (40) follow a substantially circular course of radius R1 with respect to the shaft (70) of the carousel.

11. Machine according to claim 9, **characterized in that** the articulation shafts (60) follow a substantially circular trajectory of radius R3 with respect to the shaft (70) of the carousel.

12. Machine according to claim 11, **characterized in that,** for a predetermined angular course value of the carousel, the rollers (40) or the articulation shafts (60) follow a trajectory of radius of curvature R2 comprised between R1 and R3.

13. Machine according to claim 12, **characterized in that** the radii of curvature R1 and R2 are defined by a cam path (50) provided with a substantially vertical plane of symmetry.

## Patentansprüche

1. Baugruppe, die Einheiten zum Formen von Polymeren umfasst, wobei diese Einheiten hintereinander als bewegliche Reihe angeordnet sind, wobei jede der Formeinheiten eine Form umfasst, wobei diese Form zwei Bestandteile umfasst, die um eine Gelenkachse (60) herum zueinander beweglich sind, wobei die Bewegung dieser beiden Bestandteile (30a, 30b) zueinander beim Öffnen und Schließen der Form stattfindet, **dadurch gekennzeichnet, dass** die Baugruppe Rollen (40) umfasst, die mit einer Nocke (50) zusammenwirken, wobei jede dieser Rollen (40) über Pleuelstangen (90) mit den beiden Gelenkachsen (60) der benachbarten Formeinheiten verbunden ist, wobei der von den Rollen (40) auf der Nocke (50) beschriebene Weg und der von der Gelenkachse (60) beschriebene Weg über eine festgelegte Bahn der Formeinheiten derart dazu gebracht werden, dass sie sich aneinander annähern, damit der Abstand zwischen den Gelenkachsen (60) der benachbarten Formeinheiten über diese Bahn größer wird.

2. Baugruppe nach Anspruch 1, **dadurch gekennzeichnet, dass** die Rollen (40) einem Weg folgt, der einen im Wesentlichen festen Krümmungsradius aufweist.

3. Baugruppe nach Anspruch 1, **dadurch gekennzeichnet, dass** die Gelenkachse (60) einem Weg folgt, der einen im Wesentlichen festen Krümmungsradius aufweist.

4. Baugruppe nach einem der Ansprüche 1 bis 3, **dadurch gekennzeichnet, dass** die Formeinheiten Teil eines Karussells sind.

5. Baugruppe nach einem der Ansprüche 1 bis 4, **dadurch gekennzeichnet, dass** die beiden beweglichen Bestandteile der Formeinheiten Formenträger sind.

6. Baugruppe nach einem der Ansprüche 1 bis 5, **dadurch gekennzeichnet, dass** die beiden beweglichen Bestandteile der Formeinheiten jeweils eine Formhälfte aufweisen, wobei die beiden Formhälften um die Gelenkachse (60) herum gelenkig miteinander verbunden sind.

7. Baugruppe nach Anspruch 5 oder 6, **dadurch gekennzeichnet, dass** jeder Formenträger oder jede Formhälfte einer Formeinheit über eine Pleuelstange oder ein Gelenk mit einem Formenträger oder einer Formhälfte einer benachbarten Formeinheit verbunden ist.

8. Maschine zum Formen, Blasformen oder Streckblasen von Behältern aus thermoplastischen Werkstoffen, insbesondere PET, wobei diese Maschine mindestens eine in einem der Ansprüche 1 bis 7 dargestellte Baugruppe umfasst.

9. Maschine nach Anspruch 8, **dadurch gekennzeichnet, dass** die Formeinheiten Blasformeinheiten sind, die drehbeweglich um eine im Wesentlichen vertikale Karussellachse (70) herum montiert sind, wobei jede der Blasformeinheiten zwei im Wesentlichen identische Formsupports (30a, 30b) umfasst, wobei diese Supports um eine im Wesentlichen vertikale Gelenkachse (60) herum gelenkig aneinander montiert, sind, wobei die Rollen (40) mit einer Spur (50) zusammenwirken, wobei jede der Rollen (40) über Pleuelstangen (90) mit den beiden Gelenkachsen (60) der benachbarten Formeinheiten verbunden ist, wobei der von den Rollen (40) auf der Bahn (50) beschriebene Weg und der von den Gelenkachsen (60) beschriebene Weg über eine festgelegte Bahn der Formeinheiten derart dazu gebracht werden, dass sie sich aneinander annähern, damit der Abstand zwischen den Gelenkachsen (60) der benachbarten Formeinheiten über diese Bahn größer wird.

10. Maschine nach Anspruch 9, **dadurch gekennzeichnet, dass** die Rollen (40) einem zur Achse (70) des Karussells im Wesentlichen kreisförmigen Weg mit dem Radius R1 folgen.

11. Maschine nach Anspruch 9, **dadurch gekennzeichnet, dass** die Gelenkachsen (60) einem zur Achse (70) des Karussells im Wesentlichen kreisförmigen Weg mit dem Radius R3 folgen.

12. Maschine nach Anspruch 11, **dadurch gekennzeichnet, dass** die Rollen (40) oder die Gelenkachsen (60) über einen festgelegten Wert der Winkelbahn des Karussells einem Weg mit dem zwischen R1 und R3 umfassten Krümmungsradius R2 folgen.

13. Maschine nach Anspruch 12, **dadurch gekennzeichnet, dass** die Krümmungsradien R1 und R2 von einer Nockenbahn (50) definiert sind, die mit einer im Wesentlichen vertikalen Symmetrieebene versehen ist.
